# EUROPÄISCHE PATENTSCHRIFT

(11) **EP 1 538 152 B1**
(45) Veröffentlichungstag und Bekanntmachung des Hinweises auf die Patenterteilung: **22.03.2006**
(21) Anmeldenummer: 04024808.0
(22) Anmeldetag: 19.10.2004
(51) Int. Cl.: C07F 7/18

(54) **Verfahren zur Herstellung von (Mercaptoorganyl)-alkoxysilanen**
Process for the preparation of (mercaptoorganyl)-alkoxysilanen
Procédé pour la préparation des (mercaptoorganyl)-alkoxysilanes

(30) Priorität: 06.11.2003 DE 10351735
(43) Veröffentlichungstag der Anmeldung: 08.06.2005
(73) Patentinhaber: Degussa AG, 40474 Düsseldorf (DE)
(72) Erfinder: Korth, Karsten, Dr., 79639 Grenzach-Wyhlen (DE); Albert, Philipp, Dr., 79539 Lörrach (DE); Kiefer, Ingo, 79650 Schopfheim (DE)

(56) Entgegenhaltungen:
- EP-A- 0 471 164
- US-A- 5 840 952

## Beschreibung

Die Erfindung betrifft ein Verfahren zur Herstellung von (Mercaptoorganyl)alkoxysilanen.

Aus GB 1 102 251 ist die Umsetzung von Alkalihydrogensulfiden mit (Halogenalkyl)alkoxysilanen in methanolischem Medium zu den entsprechenden (Mercaptoalkyl)-alkoxysilanen bei Normaldruck bekannt. Nachteilig bei dieser Verfahrensweise ist die zur Erzielung hoher Umsatzraten außergewöhnlich lange Reaktionszeit (96 h) und die dabei erzielte unbefriedigende Ausbeute.

Es ist bekannt (Mercaptoalkyl)alkoxysilane durch die Umsetzung von Alkalihydrogensulfid mit geeigneten (Halogenalkyl)alkoxysilanen unter Anwesenheit von 10-100 % molarem Überschuss an H₂S herzustellen (US 5,840,952). Dieses Verfahren hat im industriellen Maßstab den Nachteil, daß hochgiftiges H₂S bevorratet, dosiert und gehandhabt werden muß und das Verfahren in 2 Stufen durchgeführt wird, wodurch die Raum-ZeitAusbeute des Verfahrens grundsätzlich sinkt.

Ferner ist bekannt (Mercaptoalkyl)alkoxysilane durch die Umsetzung von (Halogenalkyl)alkoxysilanen mit Alkalihydrogensulfid (NaSH) in polaren, aprotischen Lösungsmitteln herzustellen (EP 0 471 164). Der Nachteil des Verfahrens besteht darin, daß große Mengen, mindestens 50 Vol%, Lösungsmittel verwendet werden und dieses beispielsweise im Falle von Dimethylformamid giftig ist. Zudem erschwert der hohe Siedepunkt von Dimethylformamid die spätere destillative Aufarbeitung und Reinigung der Reaktionsprodukte.

Aufgabe der Erfindung ist es, ein Verfahren zur Herstellung von (Mercaptoorganyl)alkoxysilanen zur Verfügung zu stellen, daß unter Vermeidung der Bevorratung, Dosierung und Zuführung von hochgiftigem Schwefelwasserstoff oder giftigem Dimethylformamid kurze Reaktionszeiten ermöglicht und damit hohe Raum-Zeitausbeuten bei guter Selektivität bei der Umsetzung der (Halogenorganyl)silane ermöglicht.

Gegenstand der Erfindung ist ein Verfahren zur Herstellung von (Mercaptoorganyl)alkoxysilanen, welches dadurch gekennzeichnet ist, daß man Alkalimetallhydrogensulfid mit einem Gemisch aus (Halogenorganyl)-alkoxysilan und (Halogenorganyl)halogensilan in einem Alkohol in einem geschlossenen Gefäß unter Luftabschluß und einem erhöhten Druck umsetzt.

### (Mercaptoorganyl)alkoxysilane können Verbindungen der allgemeinen Formel I

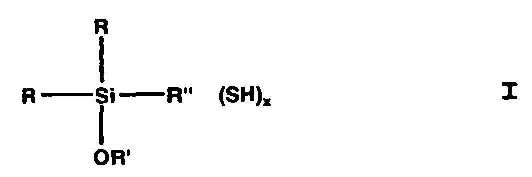

sein, wobei
R gleich oder verschieden und eine Alkyl-,vorzugsweise CH₃, Alkenyl-, Aryl- oder Aralkylgruppe mit C₁-C₈ oder eine OR' Gruppe ist,
R' gleich oder verschieden und eine C₁-C₂₄ , vorzugsweise C₁-C₄ oder C₁₂-C₁₈, verzweigte oder unverzweigte einbindige Alkyl- oder Alkenyl-Gruppe, Arylgruppe oder Aralkylgruppe ist,
R'' eine verzweigte oder unverzweigte, gesättigte oder ungesättigte, aliphatische, aromatische oder gemischt aliphatische /aromatische zweibindige C₁-C₃₀ Kohlenwasserstoffgruppe, die gegebenenfalls mit F-, Cl-, Br-, I-, NH₂-, oder NHR' substituiert ist, ist,
x gleich 1-3 ist.

Für x = 1 kann R'' -CH₂- , -CH₂CH₂-, -CH₂CH₂CH₂-, -CH₂CH₂CH₂CH₂-, -CH(CH₃)-, -CH₂CH(CH₃)-, -CH(CH₃)CH₂-, -C(CH₃)₂-, -CH(C₂H₅)-, -CH₂CH₂CH(CH₃)-, -CH₂CH(CH₃)CH₂- oder 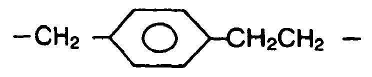 bedeuten.

Für x = 2 kann R'' CH, -CH-CH₂, -CH₂-CH, -C-CH₃, -CH-CH₂-CH₂, -CH-CH-CH₃ oder -CH₂-CH-CH₂ bedeuten.

### (Mercaptoorganyl)alkoxysilane der allgemeinen Formel I können sein:

3-Mercaptopropyl(trimethoxysilan),
3-Mercaptopropyl(triethoxysilan),
3-Mercaptopropyl(diethoxymethoxysilan),
3-Mercaptopropyl(tripropoxysilan),
3-Mercaptopropyl(dipropoxymethoxysilan),
3-Mercaptopropyl(tridodecanoxysilan),
3-Mercaptopropyl(tritetradecanoxysilan), '
3-Mercaptopropyl(trihexadecanoxysilan),
3-Mercaptopropyl(trioctadecanoxysilan),
3-Mercaptopropyl(didodecanoxy)tetradecanoxysilan,
3-Mercaptopropyl(dodecanoxy)tetradecanoxy(hexadecanoxy) silan,

3-Mercaptopropyl(dimethoxymethylsilan),
3-Mercaptopropyl(methoxydimethylsilan),
3-Mercaptopropyl(diethoxymethylsilan),
3-Mercaptopropyl(ethoxydimethylsilan),

3-Mercaptopropyl(dipropoxymethylsilan),
3-Mercaptopropyl(propoxydimethylsilan),
3-Mercaptopropyl(diisopropoxymethylsilan),
3-Mercaptopropyl (isopropoxydimethylsilan),
3-Mercaptopropyl (dibutoxymethylsilan),
3-Mercaptopropyl(butoxydimethylsilan),
3-Mercaptopropyl(diisobutoxymethylsilan),
3-Mercaptopropyl (isobutoxydimethylsilan),
3-Mercaptopropyl(didodecanoxymethylsilan),
3-Mercaptopropyl(dodecanoxydimethylsilan),
3-Mercaptopropyl(ditetradecanoxymethylsilan),
3-Mercaptopropyl(tetradecanoxydimethylsilan),

2-Mercaptoethyl(trimethoxysilan),
2-Mercaptoethyl (triethoxysilan),
2-Mercaptoethyl (diethoxymethoxysilan),
2-Mercaptoethyl (tripropoxysilan),
2-Mercaptoethyl(dipropoxymethoxysilan),
2-Mercaptoethyl(tridodecanoxysilan),
2-Mercaptoethyl(tritetradecanoxysilan),
2-Mercaptoethyl(trihexadecanoxysilan),
2-Mercaptoethyl(trioctadecanoxysilan),
2-Mercaptoethyl(didodecanoxy)tetradecanoxysilan,
2-Mercaptoethyl(dodecanoxy)tetradecanoxy(hexadecanoxy) silan,

2-Mercaptoethyl (dimethoxymethylsilan),
2-Mercaptoethyl(methoxydimethylsilan),
2-Mercaptoethyl (diethoxymethylsilan),
2-Mercaptoethyl(ethoxydimethylsilan),

1-Mercaptomethyl(trimethoxysilan),
1-Mercaptomethyl(triethoxysilan),
1-Mercaptomethyl(diethoxymethoxysilan),
1-Mercaptomethyl(dipropoxymethoxysilan),
1-Mercaptomethyl(tripropoxysilan),
1-Mercaptomethyl(trimethoxysilan),
1-Mercaptomethyl(dimethoxymethylsilan),
1-Mercaptomethyl(methoxydimethylsilan),
1-Mercaptomethyl(diethoxymethylsilan),
1-Mercaptomethyl(ethoxydimethylsilan),

1,3-Dimercaptopropyl(trimethoxysilan).
1,3-Dimercaptopropyl(triethoxysilan),
1,3-Dimercaptopropyl(tripropoxysilan),
1,3-Dimercaptopropyl(tridodecanoxysilan),
1,3-Dimercaptopropyl(tritetradecanoxysilan),
1,3-Dimercaptopropyl(trihexadecanoxysilan),

2,3-Dimercaptopropyl(trimethoxysilan),
2,3-Dimercaptopropyl(triethoxysilan),
2,3-Dimercaptopropyl(tripropoxysilan),
2,3-Dimercaptopropyl(tridodecanoxysilan),
2,3-Dimercaptopropyl(tritetradecanoxysilan),
2,3-Dimercaptopropyl(trihexadecanoxysilan),

3-Mercaptobutyl(trimethoxysilan),
3-Mercaptobutyl(triethoxysilan),
3-Mercaptobutyl (diethoxymethoxysilan),
3-Mercaptobutyl(tripropoxysilan),
3-Mercaptobutyl(dipropoxymethoxysilan),
3-Mercaptobutyl(dimethoxymethylsilan),
3-Mercaptobutyl (diethoxymethylsilan),
3-Mercapto-(2-Methyl)propyl(dimethylmethoxysilan)
3-Mercapto-2-Methyl-propyl(dimethylethoxysilan)
3-Mercapto-2-Methyl-propyl(dimethyltetradecanoxysilan)
3-Mercaptobutyl(dimethylmethoxysilan),
3-Mercapto-2-Methyl-propyl(dimethylethoxysilan)
3-Mercapto-(2-Methyl)propyl(dirnethylmethoxysilan)
3-Mercapto-2-Methyl-propyl(dimethyltetradecanoxysilan)
3-Mercaptobutyl(dimethylethoxysilan),
3-Mercaptobutyl (tridodecanoxysilan),
3-Mercaptobutyl(tritetradecanoxysilan),
3-Mercaptobutyl(trihexadecanoxysilan),
3-Mercaptobutyl(didodecanoxy)tetradecanoxysilan oder
3-Mercaptobutyl(dodecanoxy)tetradecanoxy(hexadecanoxy) silan.

Es können bei dem Verfahren zur Herstellung von (Mercaptoorganyl)alkoxysilanen Verbindungen der allgemeinen Formel I oder auch Mischungen aus Verbindungen der allgemeine Formel I entstehen.

Als (Halogenorganyl)alkyoxysilane können Verbindungen der allgemeinen Formel II 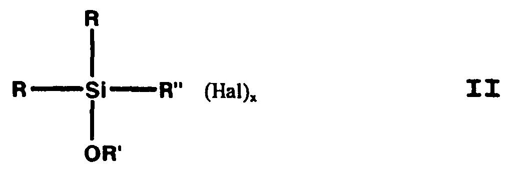 eingesetzt werden, wobei x, R, R' und R" die oben angegebene Bedeutung haben und Hal Chlor, Brom, Fluor oder Iod ist.

Vorzugsweise können als (Halogenorganyl)alkyoxysilane
3-Chlorbutyl(triethoxysilan),
3-Chlorbutyl(trimethoxysilan),
3-Chlorbutyl(diethoxymethoxysilan),
3-Chlorpropyl(triethoxysilan),
3-Chlorpropyl(trimethoxysilan),
3-Chlorpropyl(diethoxymethoxysilan),
2-Chlorethyl(triethoxysilan),
2-Chlorethyl(trimethoxysilan),
2-Chlorethyl(diethoxymethoxysilan),
1-Chlormethyl(triethoxysilan),
1-Chlormethyl(trimethoxysilan),
1-Chlormethyldiethoxymethoxysilan),
3-Chlorpropyl(diethoxymethylsilan),
3-Chlorpropyl(dimethoxymethylsilan),
2-Chlorethyl(diethoxymethylsilan),
2-Chlorethyl(dimethoxymethylsilan),
1-Chlormethyl(diethoxymethylsilan),
1-Chlormethyl(dimethoxymethylsilan),
3-Chlorpropyl(ethoxydimethylsilan),
3-Chlorpropyl(methoxydimethylsilan),
2-Chlorethyl(ethoxydimethylsilan),
2-Chlorethyl(methoxydimethylsilan),
1-Chlormethyl(ethoxydimethylsilan) oder
1-Chlormethyl(methoxydimethylsilan) eingesetzt werden.

Das (Halogenorganyl)alkoxysilan kann ein (Halogenorganyl)alkoxysilan der Formel II oder eine Mischung aus (Halogenorganyl)alkoxysilanen der Formel II sein.

Als (Halogenorganyl)halogensilane können Verbindungen der allgemeinen Formel III 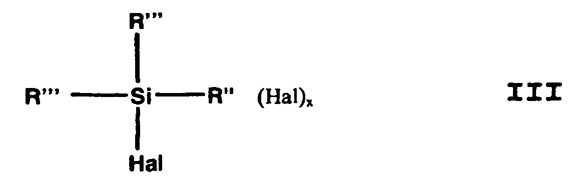 eingesetzt werden, wobei x, Hal, R und R" die oben angegebene Bedeutung haben und R''' unabhängig voneinander R oder Hal ist.

Vorzugsweise können als (Halogenorganyl)halogensilane
3-Chlorbutyl(trichlorsilan),
3-Chlorpropyl(trichlorsilan),
2-Chlorethyl(trichlorsilan),
1-Chlormethyl(trichlorsilan),
3-Chlorbutyl(dichlormethoxysilan),
3-Chlorpropyl(dichlormethoxysilan),
2-Chlorethyl(dichlormethoxysilan),
1-Chlormethyl(dichlormethoxysilan),
3-Chlorbutyl(dichlorethoxysilan),
3-Chlorpropyl(dichlorethoxysilan),
2-Chlorethyl(dichlorethoxysilan),
1-Chlormethyl(dichlorethoxysilan),
3-Chlorbutyl(chlordiethoxysilan),
3-Chlorpropyl(chlordiethoxysilan),
2-Chlorethyl(chlordiethoxysilan),
1-Chlormethyl(chlordiethoxysilan),
3-Chlorbutyl(chlordimethoxysilan),
3-Chlorpropyl(chlordimethoxysilan),
2-Chlorethyl(chlordimethoxysilan),
1-Chlormethyl(chlordimethoxysilan),
3-Chlorbutyl(dichlormethylsilan),
3-Chlorpropyl(dichlormethylsilan),
2-Chlorethyl(dichlormethylsilan),
1-Chlormethyl(dichlormethylsilan),
3-Chlorbutyl(chlor-)(methyl-)methoxysilan),
3-Chlorpropyl(chlor-)(methyl-)methoxysilan),
2-Chlorethyl(chlor-)(methyl-)methoxysilan),
1-Chlormethyl(chlor-)(methyl-)methoxysilan),
3-Chlorbutyl(chlor-)(methyl-)ethoxysilan),
3-Chlorpropyl(chlor-)(methyl-)ethoxysilan),
2-Chlorethyl(chlor-)(methyl-)ethoxysilan),
1-Chlormethyl(chlor-)(methyl-)ethoxysilan),
3-Chlorbutyl(chlordimethylsilan),
3-Chlorpropyl(chlordimethylsilan),
2-Chlorethyl(chlordimethylsilan) oder
1-Chlormethyl(chlordimethylsilan) eingesetzt werden.

Das (Halogenorganyl)halogensilan kann ein (Halogenorganyl)halogensilan der allgemeinen Formel III oder eine Mischung aus (Halogenorganyl)halogensilanen der allgemeinen Formel III sein.

### (Mercaptoorganyl)alkoxysilane der allgemeinen Formel I

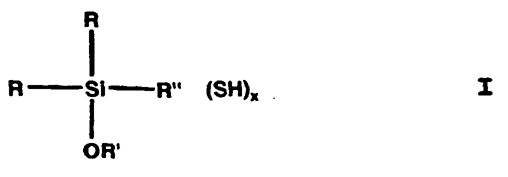

können durch Umsetzung von Alkalimetallhydrogensulfid mit (Halogenorganyl)alkoxysilanen der allgemeinen Formel II 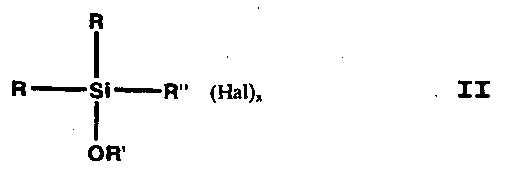 und (Halogenorganyl)halogensilan der allgemeinen Fomel III 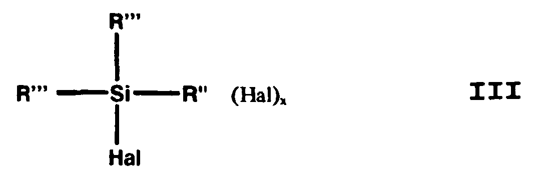 in einem Alkohol in einem geschlossenen Gefäß unter Luftabschluß und einem erhöhten Druck hergestellt werden.

Es kann durch die Wahl der (Halogenorganyl)alkyoxy-silane und (Halogenorganyl)halogensilane aktiv und gezielt Einfluß auf die Zusammensetzung von Mischungen aus Verbindungen der allgemeinen Formel I genommen werden.

(Halogenorganyl)alkyoxysilan und (Halogenorganyl)-halogensilan können im molaren Verhältnis 1:0,00001 bis 1:0,8, vorzugsweise 1:0,00001 bis 1:0,5, besonders bevorzugt 1:0,00001 bis 1:0,09, eingesetzt werden.

Die für das Verfahren verwendete Mischung aus entsprechendem (Halogenorganyl)alkyoxysilan und (Halogenorganyl)halogensilan kann in Abhängigkeit von der verwendeten Apparatur und den gewünschten Effekten, beispielsweise Selektivität der Reaktion, Dauer der Umsetzung, Reaktordurchsatz, Reaktion von (Halogenorganyl)alkyoxysilan und (Halogenorganyl)-halogensilan miteinander, Reaktormaterial oder Prozeßabfolge, bereits vor der Zugabe des Alkalisulfides hergestellt werden.

Die Qualität und Art der Zusammensetzung der Mischung aus (Halogenorganyl)alkyoxysilan und (Halogenorganyl)-halogensilan kann auf Grundlage der Menge und Art der in der Mischung enthaltenen, hydrolisierbaren Si-Hal Bindungen beurteilt werden.

Die Menge an hydrolisierbarem Si-Halogenid in den Mischungen aus Halogenorganyl)alkyoxysilan und (Halogenorganyl)halogensilan kann zwischen 10 und 800000 mg/kg betragen.

Die Menge an hydrolisierbarem Si-Halogenid wird durch das folgende verfahren bestimmt:

Maximal 20 g der Probe werden in einem 150 ml Becherglas mit 80 ml Ethanol und 10 ml Essigsäure versetzt. Der Halogenidgehalt wird potentiographisch mit Silbernitratlösung (c(AgN03)=0,01 mol/l) titriert.

Die vorteilhaften molaren Verhältnisse der Mischungen aus (Halogenorganyl)alkyoxysilanen und (Halogen-organyl)halogensilanen können unter anderem von der Anzahl der Si-Halogen-Funktionen der gewählten (Halogenorganyl)halogensilane abhängig sein.

Beispielsweise kann bei der Umsetzung von 3-Chlorpropyl(trimethoxysilan) oder 3-Chlorpropyl-(triethoxysilan) und 3-Chlorpropyl(trichlorsilan) bevorzugt ein molares Verhältnis von 1:0,00001 bis 1:0,03 verwendet werden.

Beispielsweise kann bei der Umsetzung von 3-Chlorpropyl(methyldimethoxysilan) oder 3-Chlorpropyl(methyldiethoxysilan) und 3-Chlorpropyl-(methyldichlorsilan) bevorzugt ein molares Verhältnis von 1:0,00001 bis 1:0,045 verwendet werden.

Beispielsweise kann bei der Umsetzung von 3-Chlorpropyl(dimethylmethoxysilan) oder von 3-Chlorpropyl(dimethylethoxysilan) und 3-Chlorpropyl-(dimethylchlorsilan) bevorzugt ein molares Verhältnis von 1:0,00001 bis 1:0,09 verwendet werden.

Das (Halogenorganyl)alkoxysilan und (Halogenorganyl)-halogensilan können miteinander in beliebiger Reihenfolge, Weise, Temperatur und Zeitdauer vermischt werden und erst dann der Alkohol und das Alkalihydrogensulfid gemeinsam oder nacheinander zugegeben werden.

Das (Halogenorganyl)halogensilan, Alkalihydrogensulfid und Alkohol können miteinander in beliebiger Reihenfolge, Weise, Temperatur und Zeitdauer vermischt werden und erst dann das (Halogenorganyl)alkoxysilan zugegeben werden.

Das (Halogenorganyl)alkoxysilan, Alkalihydrogensulfid und Alkohol können miteinander in beliebiger Reihenfolge, Weise, Temperatur und Zeitdauer vermischt werden und erst dann das (Halogenorganyl)halogensilan zugegeben werden.

Als Alkalimetallhydrogensulfide können Lithiumhydrogensulfid (LiSH), Natriumhydrogensulfid (NaSH), Kaliumhydrogensulfid (KSH) und Cäsiumhydrogensulfid (CsSH) eingesetzt werden.

Die verwendete, molare Menge an Alkalimetallhydrogensulfid kann die Summe der molaren Mengen des eingesetzten (Halogenorganyl)alkoxysilans und des eingesetzten (Halogenorganyl)halogensilans um 1% bis 50%, vorzugsweise 5% bis 25%, besonders bevorzugt 5% bis 15%, übersteigen.

Geringere als die stöchiometrisch benötigten Mengen an Alkalimetallhydrogensulfid können zu einer unvollständigen Umsetzung führen. Dadurch kann in der Folge das Produkt entweder mit Edukt verunreinigt sein, oder es wird eine aufwendige Destillation notwendig, um Edukte und Produkte voneinander zu trennen.

Als Alkohol können primäre, sekundäre oder tertiäre Alkohole mit 1 bis 24, vorzugsweise 1 bis 6, besonders bevorzugt 1 bis 4, Kohlenstoffatomen eingesetzt werden.

Als primäre, sekundäre oder tertiäre Alkohole können Methanol, Ethanol, n-Propanol, i-Propanol, i-Butanol, n-Butanol, Dodecanol, Tetradecanol, Hexadecanol oder Octadecanol eingesetzt werden.

Die Menge an Alkohol kann mindestens 100 Vol.-%, bevorzugt 250 bis 1000 Vol.-%,-besonders bevorzugt 500 bis 1000 Vol.-%, der eingesetzten Silankomponenten betragen.

Zu Beginn der Umsetzung und/oder während der Umsetzung und/oder zum Ende der Umsetzung können polare, protische, aprotische, basische oder saure Additive zur Reaktionsmischung zugegeben werden.

Unter erhöhtem Druck kann ein Überdruck von 0,1 bis 10 bar, bevorzugt 1 bis 7 bar, über Normaldruck verstanden werden.

Die Umsetzung kann bei Temperaturen zwischen 0 und 180°C, bevorzugt zwischen 70 und 150°C, besonders! bervorzugt zwischen 70 und 125°C, erfolgen.

Die jeweils bezüglich der Ausbeute an Zielprodukt und Ausnutzung des Reaktionsvolumens optimale Reaktionstemperatur kann in Abhängigkeit von der Struktur der eingesetzten (Halogenorganyl)alkyoxysilans und des als Lösungsmittel verwendeten Alkohols variieren.

Beispielsweise kann bei Reaktionen in Methanol eine Reaktionstemperatur zwischen 60 und 95°C im Bezug auf Reaktionszeiten, Nebenproduktmenge und Druckaufbau vorteilhaft sein.

Beispielsweise kann bei Reaktionen in Ethanol eine Reaktionstemperatur zwischen 75 und 130°C im Bezug auf Reaktionszeiten, Nebenproduktmenge und Druckaufbau vorteilhaft sein.

Die Umsetzung kann in einem geschlossenen Behälter unter Schutzgas erfolgen.

Die Umsetzung kann in korrosionsbeständigen oder korrosionsanfälligen Reaktionsgefäßen oder Autoklaven erfolgen.

Die korrosionsbeständigen Reaktionsgefäße oder Autoklaven können aus Glas, Teflon, emailliertem bzw. beschichteten Stahl, Hastelloy oder Tantal bestehen.

Die Nebenproduktmenge kann durch Wahl der Reaktionsbedingungen kleiner als 20 mol% betragen.

Neben den gewünschten Mercaptoorganylsilanverbindungen können als Nebenprodukte die entsprechenden Monosulfane oder Disulfane, sowie in Abhängigkeit von der Struktur der monomeren Mercaptoorganylsilanverbindung verschiedene Kombinationen von dimeren oder oligomeren Siloxanen aus Produkten oder auch Produkten mit Edukten entstehen.

Das erfindungsgemäße Verfahren hat den Vorteil, daß auf die Verwendung von hochtoxischen, gasförmigen Stoffen wie Schwefelwasserstoff, als Schwefelspender verzichtet werden kann. Stattdessen werden Alkalimetallhydrogensulfide, die leicht dosierbare Feststoffe sind (zum Beispiel Natriumhydrogensulfid), als Schwefelspender verwendet.

Ein weiterer Vorteil des erfindungsgemäßen Verfahrens besteht darin, daß allein durch die Verwendung eines geschlossenen Reaktionsgefäßes (Autoklav oder ähnlichem) und die Zugabe von geringen Mengen von (Halogenalkyl)halogensilanen die Selektivität erhöht werden kann.

Ein weiterer Vorteil des erfindungsgemäßen Verfahrens gegenüber bekannten Verfahren sind die hohen Umsätze bei kurzen Batchzeiten und bei technisch einfach realisierbaren Temperaturen.

### Beispiele:

Als Umsatz in den Reaktionsmischungen wird der Quotient aus der
- Summe der Flächenprozente von
   3-Mercaptopropyl(triethoxysilan), (EtO)₃Si-(CH₂)₃₋S-(CH₂)₃-Si(OEt)₃ und (EtO)₃Si-(CH₂)₃-S₂-(CH₂)₃₋Si (OEt)₃
und der
- Summe der Flächenprozente von
   3-Chlorpropyl(triethoxysilan),
   3-Mercaptopropyl(triethoxysilan), (EtO)₃Si-(CH₂)₃-S-(CH₂)₃-Si (OEt)₃ und (EtO)₃Si-(CH₂)₃-S₂- (CH₂)₃-Si (OEt)₃
definiert.

Als Umsatz in dem isolierten Rohprodukt wird der Quotient aus der
- Summe der Gewichtsprozente von
   3-Mercaptopropyl(triethoxysilan) und
   (EtO)₃Si-(CH₂)₃-S-(CH₂)₃-Si(OEt)₃
und der
- Summe der Gewichtsprozente von
   3-Chlorpropyl(triethoxysilan),
   3-Mercaptopropyl(triethoxysilan) und (EtO)₃Si-(CH₂)₃-S-(CH₂)₃-Si(OEt)₃
definiert.

Als Selektivität in den Reaktionsmischungen wird der Quotient aus
- den Flächenprozenten von
   3-Mercaptopropyl (triethoxysilan)
und der
- Summe der Flächenprozente von
   3-Mercaptopropyl(triethoxysilan), (EtO)₃Si-(CH₂)₃-S-(CH2)₃-Si(OEt)₃ und (EtO)₃Si-(CH₂)₃-S₂-(CH₂)₃-Si(OEt)₃
definiert.

Als Selektivität in dem isolierten Rohprodukt wird der Quotient aus
- den Gewichtsprozenten von
   3-Mercaptopropyl(triethoxysilan)
und der
- Summe der Gewichtsprozente von
   3-Mercaptopropyl(triethoxysilan) und (EtO)₃Si-(CH₂)₃₋S-(CH₂)₃-Si(OEt)
definiert.

Getrocknetes NaSH ist als kommerzielles Produkt z.B. von STREM / ABCR erhältlich.

### GC-Analytik

Die GC-Analytik der Reaktionsmischungen wird auf einem Gaschromatographen HP 6890 (WLD) mit einer 30m langen DB5 Säule mit 0,53 mm Dicke und 1,5 µm Filmdicke durchgeführt. Als Detektor wird ein Wärmeleitfähigkeitsdetektor eingesetzt. Das verwendete Temperaturprogramm beinhaltete folgende Abläufe:
- Starttemperatur 100°C
- Initialzeit 1 Min.
- 20°C/Min auf 280°C
- 280°C 10 Min. halten

Die Retentionszeiten für die folgenden Komponenten betragen:
bei 3,3 min = Cl-(CH₂)₃-Si(OEt)₃
bei 5,7 min Si263 = HS-(CH₂)₃-Si(OEt)₃
bei 9,0-10,5 min verschiedene Siloxandimere aus Edukt- und Produktsilan
bei 11,0 min = (EtO)₃Si-(CH₂)₃-S-(CH₂)3-Si(OEt)₃
bei 12,4 min = (EtO)₃Si-(CH₂)₃-S₂-(CH₂)₃-Si(OEt)₃

### Vergleichsbeispiel 1:

Das Beispiel 1 aus GB 1,102,251 ergibt eine isolierte Ausbeute von 42 %.

### Vergleichsbeispiel 2:

Das Vergleichsbeispiel 3 aus US 5,840,952 ergibt mit einer durch GC bestimmten Ausbeute 81%.

### Vergleichsbeispiel 3:

Das Vergleichsbeispiel 5 aus US 5,840,952 ergibt mit einer durch GC bestimmten Ausbeute 40,3%.

### Vergleichsbeispiel 4:

In einem Edelstahlautoklaven mit Glaseinsatz werden 50 g 3-Chlorpropyl(triethoxysilan) und 125 ml trockenes Ethanol bei Raumtemperatur vermischt. Zu der Lösung werden 11,7 g getrocknetes NaSH gegeben und der Autoklav anschließend luftdicht verschlossen. Die Reaktionsmischung wird im Autoklaven für 120 min auf 100°C erwärmt und anschließend auf Raumtemperatur abgekühlt. Die GC-Messung der Reaktionsmischung ergibt folgende Zusammensetzung in Flächenprozent (F1.%):

| | |
|---|---|
| 3-Chlorpropyl(triethoxysilan) | 1,5 Fl.%, |
| 3-Mercaptopropyl(triethoxysilan) | 18,4 Fl.%, |
| dimere Siloxane aus 3-Chlorpropyl-(triethoxysilan) und 3-Mercaptopropyl-(triethoxysilan) | 0,3 Fl.%, |
| Bis(triethoxysilypropyl)monosulfan | 3,2 Fl.% |
| Bis(triethoxysilypropyl)disulfan | 0,3 Fl.% |

Der Umsatz beträgt 93,7% und die Selektivität 82,9%.

### Vergleichsbeispiel 5:

In einem Edelstahlautoklaven mit Glaseinsatz werden 50 g 3-Chlorpropyl(triethoxysilan) und 125 ml trockenes Ethanol bei Raumtemperatur vermischt. Zu der Lösung werden 11,7 g getrocknetes NaSH gegeben und der Autoklav anschließend luftdicht verschlossen. Die Reaktionsmischung wird im Autoklaven für 240 min auf 90°C erwärmt und anschließend auf Raumtemperatur abgekühlt. Die GC-Messung der Reaktionsmischung ergibt folgende Zusammensetzung in Flächenprozent (Fl.%):

| | |
|---|---|
| 3-Chlorpropyl(triethoxysilan) | 1,5 Fl.%, |
| 3-Mercaptopropyl(triethoxysilan) | 18,8 Fl.%, |
| dimere Siloxane aus 3-Chlorpropyl-(triethoxysilan) und 3-Mercaptopropyl-(triethoxysilan) | 0,4 Fl.%, |
| Bis(triethoxysilypropyl)monosulfan | 2,7 Fl.% |
| Bis(triethoxysilypropyl)disulfan | 0,5 Fl.% |

Der Umsatz beträgt 93,7% und die Selektivität 84%.

### Beispiel 1:

In einem Edelstahlautoklaven mit Glaseinsatz werden 50 g 3-Chlorpropyl(triethoxysilan), 0,5 g 3-Chlorpropyl(trichlorsilan) und 125 ml trockenes Ethanol bei Raumtemperatur vermischt. Zu der Lösung werden 13,5 g getrocknetes NaSH gegeben und der Autoklav anschließend luftdicht verschlossen. Die Reaktionsmischung wird im Autoklaven für 240 min auf 90°C erwärmt und anschließend auf Raumtemperatur abgekühlt. Die GC-Messung der Reaktionsmischung ergibt folgende Zusammensetzung in Flächenprozent (Fl.%):

| | |
|---|---|
| 3-Chlorpropyl(triethoxysilan) | 2,5 Fl.%, |
| 3-Mercaptopropyl(triethoxysilan) | 37,0 Fl.%, |
| dimere Siloxane aus 3-Chlorpropyl-(triethoxysilan) und 3-Mercaptopropyl-(triethoxysilan) | 2,2 Fl.%, |
| Bis(triethoxysilypropyl)monosulfan | 1,9 Fl.% |
| Bis(triethoxysilypropyl)disulfan | 0,9 Fl.% |

Der Umsatz beträgt 94,3% und die Selektivität 88%.

### Beispiel 2:

In einem Edelstahlautoklaven mit Glaseinsatz werden 50 g 3-Chlorpropyl(triethoxysilan), 1,0 g 3-Chlorpropyl(trichlorsilan) und 125 ml trockenes Ethanol bei Raumtemperatur vermischt. Zu der Lösung werden 13,5 g getrocknetes NaSH gegeben und der Autoklav anschließend luftdicht verschlossen. Die Reaktionsmischung wird im Autoklaven für 120 min auf 100°C erwärmt und anschließend auf Raumtemperatur abgekühlt. Die GC-Messung der Reaktionsmischung ergibt folgende Zusammensetzung in Flächenprozent (Fl.%):

| | |
|---|---|
| 3-Chlorpropyl(triethoxysilan) | 0,9 Fl.%, |
| 3-Mercaptopropyl(triethoxysilan) | 19,6 Fl.%, |
| dimere Siloxane aus 3-Chlorpropyl-(triethoxysilan) und 3-Mercaptopropyl-(triethoxysilan) | 0,3 Fl.%, |
| Bis(triethoxysilypropyl)monosulfan | 1,2 Fl.% |
| Bis(triethoxysilypropyl)disulfan | 0,6 Fl.% |

Der Umsatz beträgt 96% und die Selektivität 90%.

### Beispiel 3:

In einem Autoklaven mit Glasdoppelmantel und Hastelloy C22 Deckel + Armaturen (Buechi AG) werden bei Raumtemperatur 28,6 g getrocknetes NaSH und 600 ml trockenes Ethanol vorgelegt und für 15 min bei 50°C gerührt. Es werden 5 g 3-Chlorpropyl(trichlorsilan) mit einer Druckbürette zu der Suspension gegeben und die Suspension für weitere 10 min gerührt. Über die Bürette werden 100 g 3-Chlorpropyl(triethoxysilan) und 200 ml Ethanol zu der Suspension gegeben. Die Mischung wird unter Rühren auf 93-96°C erwärmt und die Temperatur für 120 min gehalten. Die Mischung wird anschließend auf Raumtemperatur abgekühlt und eine Probe entnommen. Die GC-Analyse der Reaktionsmischung ergibt folgende Zusammensetzung in Flächenprozent:

| | |
|---|---|
| 3-Chlorpropyl(triethoxysilan) | 0,728 |
| 3-Mercaptopropyl(triethoxysilan) | 6,099 |
| (EtO)₃Si- (CH₂)₃-S- (CH₂)₃-Si (OEt)₃ | 0, 078 |
| (EtO)₃Si-(CH₂)₃-S₂- (CH₂)₃-Si(OEC)₃ | 0,061 |

Basierend auf den oben genannten Werten beträgt der Umsatz 90% und die Selektivität der Reaktion 98%.

Die erhaltene Suspension wird filtriert. Der abgetrennte Feststoff wird mit 600 ml n-Pentan gewaschen. Die erhaltene Lösung wird am Rotationsverdampfer von den flüchtigen Bestandteilen bei 20-600 mbar und 80-110°C befreit. Die erhaltene Suspension wird mit 200 ml Pentan gut vermischt und für 13-14 h bei 4-8°C gelagert. Der ausgefallene Feststoff wird durch Filtration abgetrennt und mit Pentan gewaschen. Von der erhaltenen, klaren Lösung wird das Pentan mit einem Rotationsverdampfer bei 20-600 mbar und 80-110°C entfernt. Es werden 99,6 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 9 |
| 3-Mercaptopropyl(triethoxysilan) (GC) | 86,5 |
| (EtO)₃Si-(CH₂)₃-S-(CH₂)₃-Si(OEt)₃ (GC) | 3,3 |

Basierend auf den oben genannten Werten beträgt der Umsatz 91% und die Selektivität der Reaktion 96%.

### Beispiel 4:

In einem Autoklaven mit Glasdoppelmantel und Hastelloy C22 Deckel + Armaturen (Buechi AG) werden bei Raumtemperatur 37,5 g getrocknetes NaSH und 600 ml trockenes Ethanol vorgelegt. Die Suspension wird erwärmt und 20 min bei 50°C gerührt. Es wird eine Mischung aus 100 g 3-Chlorpropyl(dimethylethoxysilan) und 5 g 3-Chlorpropyl(dimethylchlorsilan) mit einer Druckbürette zu der Suspension gegeben. Zu der Mischung werden weitere 200 ml Ethanol gegeben und unter Rühren auf 93-96°C erwärmt. Die Temperatur wird für 180 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(dimethylethoxysilan) | 0,091 |
| 3-Mercaptopropyl(dimethylethoxysilan) | 4,621 |
| (EtO) (CH₃)₂Si-(CH₂)₃-S-(CH₂)₃-Si(CH₃)₂(OEt) | 0,074 |
| (EtO) (CH₃)₂Si-(CH₂)₃-S₂-(CH₂)₃-Si(CH₃)₂(OEt) | 0,155 |

Basierend auf den oben genannten Werten beträgt der Umsatz 98% und die Selektivität der Reaktion 95%.

### Beispiel 5:

In einem Autoklaven mit Glasdoppelmantel und Hastelloy C22 Deckel + Armaturen (Buechi AG) werden bei Raumtemperatur 36,2 g getrocknetes NaSH und 800 ml trockenes Ethanol vorgelegt, erwärmt und für 15 min bei 50°C gerührt. Es wird eine Mischung aus 100 g 3-Chlorpropyl(triethoxysilan) und 20 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer Druckbürette zu der Suspension gegeben. Die 20 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden 200 ml Ethanol zudosiert und unter Rühren auf 102-104°C erwärmt. Die Temperatur wird für 180 min gehalten. Die Mischung wird anschließend'auf ungefähr 55°C abgekühlt und 2,6 g Ameisensäure in 100 ml Ethanol mit einer Druckbürette zudosiert. Nach 15 min wird eine Probe entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,034 |
| 3-Mercaptopropyl(triethoxysilan) | 5,494 |
| (EtO)₃Si-(CH₂)₃-S- (CH₂)₃-Si (OEt)₃ | 0,060 |
| (EtO)₃Si-(CH₂)₃-S₂- (CH₂)₃-Si(OEt)₃ | 0,028 |

Basierend auf den oben genannten Werten beträgt der Umsatz > 99% und die Selektivität der Reaktion 98%.

Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 20-600 mbar und 60-80°C befreit. Die erhaltene Suspension wird mit 200 ml Pentan vermischt und für 10 h bei 4-8°C gelagert. Der ausgefallene Feststoff wird durch Filtration abgetrennt und mit 150 ml Pentan gewaschen. Von der erhaltenen Lösung wird das Pentan mit einem Rotationsverdampfer bei 20-600 mbar und 60-80°C entfernt. Es werden 111,2 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 0,6 |
| 3-Mercaptopropyl(triethoxysilan) (GC) | 96,2 |
| (EtO)₃Si-(CH₂)₃-S-(CH₂)₃-Si(OEt)₃ (GC) | 2,1 |

Basierend auf den oben genannten Werten beträgt der Umsatz >99% und die Selektivität der Reaktion 98%.

### Beispiel 6:

In einem Autoklaven mit Glasdoppelmantel und Hastelloy C22 Deckel + Armaturen (Buechi AG) werden bei Raumtemperatur 33,6 g getrocknetes NaSH und 800 ml trockenes Ethanol vorgelegt und für 15 min bei 50°C gerührt. Es wird eine Mischung aus 97 g 3-Chlorpropyl(triethoxysilan) und 20 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer mit Druckluft betriebenen Bürette zu der Suspension gegeben. Die 20 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden weitere 200 ml Ethanol zu der Suspension gegeben. Die Mischung wird unter Rühren auf 109-110°C erwärmt und die Temperatur für 240 min gehalten. Die Mischung wird anschließend auf Raumtemperatur abgekühlt. Eine Probe wird entnommen und durch Gaschromatografie analysiert. Die GC-Analyse der Reaktionsmischung ergibt folgende Zusammensetzung in Flächenprozent:

| | |
|---|---|
| 3-Chlorpropyl(triethoxysilan) | 0,148 |
| 3-Mercaptopropyl(triethoxysilan) | 6,822 |
| (EtO)₃Si-(CH₂)₃-S-(CH₂)₃-Si (OEt)₃ | 0,085 |
| (EtO)₃Si-(CH₂)₃-S₂-(CH₂)₃-Si(OEt)₃ | 0,084 |

Basierend auf den oben genannten Werten beträgt der Umsatz 98% und die Selektivität der Reaktion 98%.

Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 20-600 mbar und 80-110°C befreit. Die erhaltene Suspension wird mit 200 ml Pentan gut vermischt und für 3-4 h bei 4-8°C gelagert. Der ausgefallene Feststoff wird durch Filtration abgetrennt und mit Pentan gewaschen. Von der erhaltenen, klaren Lösung wird das Pentan mit einem Rotationsverdampfer bei 20-600 mbar und 80-110°C entfernt. Es werden 110,3 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 1,7 |
| 3-Mercaptopropyl(triethoxysilan) (GC) | 94,8 |
| (EtO)₃Si-(CH₂)₃-S-(CH₂)₃-Si(OEt)₃ (GC) | 2,4 |

Basierend auf den oben genannten Werten beträgt der Umsatz 98% und die Selektivität der Reaktion 97%.

### Beispiel 7:

In einem Autoklaven mit Glasdoppelmantel und Hastelloy C22 Deckel + Armaturen (Buechi AG) werden bei Raumtemperatur 33,6 g getrocknetes NaSH und 800 ml trockenes Ethanol vorgelegt und für 15 min bei 50°C gerührt. Es wird eine Mischung aus 100 g 3-Chlorpropyl(triethoxysilan) und 20 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer mit Druckluft betriebenen Bürette zu der Suspension gegeben. Die 20 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden weitere 200 ml Ethanol zu der Suspension gegeben, auf 108-111°C erwärmt und die Temperatur für 240 min gehalten. Die Mischung wird anschließend auf Raumtemperatur abgekühlt und eine Probe entnommen. Die GC-Analyse der Reaktionsmischung ergibt folgende Zusammensetzung in Flächenprozent:

| | |
|---|---|
| 3-Chlorpropyl(triethoxysilan) | 0,310 |
| 3-Mercaptopropyl(triethoxysilan) | 5,151 |
| (EtO)₃Si-(CH₂)₃-S-(CH₂)₃-Si (OEt)₃ | 0,097 |
| (EtO)₃Si- (CH₂)₃-S₂-(CH₂)₃-Si(OEt)₃ | 0,254 |

Basierend auf den oben genannten Werten beträgt der Umsatz 95% und die Selektivität der Reaktion 94%.

Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 20-600 mbar und 80-110°C befreit. Die erhaltene Suspension wird mit 200 ml Pentan gut vermischt und für 3-4 h bei 4-8°C gelagert. Der ausgefallene Feststoff wird durch Filtration abgetrennt und mit Pentan gewaschen. Von der erhaltenen Lösung wird das Pentan mit einem Rotationsverdampfer bei 20-600 mbar und 80-110°C entfernt. Es werden 113,2 g einer farblosen Flüssigkeit erhalten.

Die Analyse mit GC (Dodekan als interner Standard ergibt folgende Zusammensetzung des erhaltenen Produktes in Gewichtsprozent:

| | |
|---|---|
| 3-Chlorpropyl(triethoxysilan) (GC) | 5,1 |
| 3-Mercaptopropyl(triethoxysilan) (GC) | 92,2 |
| (EtO)₃Si-(CH₂)₃-S-(CH₂)₃-Si(OEt)₃ (GC) | 2 |

Basierend auf den oben genannten Werten beträgt der Umsatz 95% und die Selektivität der Reaktion 98%.

### Beispiel 8:

In einem Autoklaven mit Glasdoppelmantel und Hastelloy C22 Deckel + Armaturen (Buechi AG) werden bei Raumtemperatur 18,1 g getrocknetes NaSH und 400 ml trockenes Ethanol vorgelegt, erwärmt und für 15 min bei 50°C gerührt. Es wird eine Mischung aus 50 g 3-Chlorpropyl(triethoxysilan) und 10 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer Druckbürette zu der Suspension gegeben. Die 10 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden weitere 100 ml Ethanol zu der Suspension gegeben. Unter Rühren wird auf 105-110°C erwärmt und die Temperatur für 180 min gehalten. Anschließend wird auf 50°C abgekühlt und 1,3 g Ameisensäure in 50 ml Ethanol mit der Druckbürette zudosiert. Die Suspension wird für weitere 15 min gerührt und eine Probe entnommen. Die GC-Analyse der Reaktionsmischung ergibt folgende Zusammensetzung in Flächenprozent:

| | |
|---|---|
| 3-Chlorpropyl(triethoxysilan) | 0,043 |
| 3-Mercaptopropyl(triethoxysilan) | 4,908 |
| (EtO)₃Si-(CH₂)₃-S-(CH₂)₃-Si(OEt)₃ | 0,112 |
| (EtO)₃Si-(CH₂)-S₂-(CH₂)₃-Si(OEt)₃ | 0,033 |

Basierend auf den oben genannten Werten beträgt der Umsatz >99 % und die Selektivität der Reaktion 97%.

Die erhaltene Suspension wird filtriert und der abgetrennte Feststoff mit 400 ml n-Pentan gewaschen.

Die erhaltene Lösung wird am Rotationsverdampfer von den flüchtigen Bestandteilen bei 20-600 mbar und 60-80°C befreit. Die erhaltene Suspension wird mit 200 ml Pentan vermischt und für 10 h bei 4-8°C gelagert. Der ausgefallene Feststoff wird durch Filtration abgetrennt und mit 150 ml Pentan gewaschen. Von der erhaltenen Lösung wird das Pentan mit einem Rotationsverdampfer bei 20-600 mbar und 60-80°C entfernt. Es werden 55,6 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 0,7 |
| 3-Mercaptopropyl(triethoxysilan) (GC) | 92,5 |
| (EtO)₃Si-(CH₂)₃-S-(CH₂)₃-Si(OEt)₃ (GC) | 3,7 |

Basierend auf den oben genannten Werten beträgt der Umsatz >99% und die Selektivität der Reaktion 96%.

### Beispiel 9:

In einem Autoklaven mit Glasdoppelmantel und Hastelloy C22 Deckel + Armaturen (Buechi AG) werden bei Raumtemperatur 36,2 g getrocknetes NaSH und 800 ml trockenes Ethanol vorgelegt und für 15 min bei 30°C gerührt. Es wird eine Mischung aus 100 g 3-Chlorpropyl(triethoxysilan) und 20 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer Druckbürette zu der Suspension gegeben. Die 20 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden weitere 200 ml Ethanol zu der Suspension gegeben, unter Rühren auf 102-104°C erwärmt und die Temperatur für 180 min gehalten. Die Mischung wird anschließend auf ungefähr 57°C abgekühlt und 2,6 g Ameisensäure in 100 ml Ethanol mit der Druckbürette zudosiert. Es wird für weitere 15 min gerührt und eine Probe entnommen. Die GC-Analyse der Reaktionsmischung ergibt folgende Zusammensetzung in Flächenprozent:

| | |
|---|---|
| 3-Chlorpropyl(triethoxysilan) | 0,036 |
| 3-Mercaptopropyl(triethoxysilan) | 4,754 |
| (EtO)₃Si-(CH₂)₃-S-(CH₂)₃-Si(OEt)₃ | 0,041 |
| (EtO)₃Si-(CH₂)₃-S₂-(CH₂)₃-Si(OEt)₃ | 0,026 |

Basierend auf den oben genannten Werten beträgt der Umsatz >99% und die Selektivität der Reaktion 98%.

Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 20-600 mbar und 60-80°C befreit. Die erhaltene Suspension wird mit 200 ml Pentan gut vermischt und für 10 h bei 4-8°C gelagert. Der ausgefallene Feststoff wird durch Filtration abgetrennt und mit 150 ml Pentan gewaschen. Von der erhaltenen Lösung wird das Pentan mit einem Rotationsverdampfer bei 20-600 mbar und 60-80°C entfernt. Es werden 111,6 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 0,7 |
| 3-Mercaptopropyl(triethoxysilan) (GC) | 93,7 |
| (EtO)₃Si-(CH₂)₃-S-(CH₂)₃-Si(OEt)₃ (GC) | 1,7 |

Basierend auf den oben genannten Werten beträgt der Umsatz >99% und die Selektivität der Reaktion 98%.

### Beispiel 10:

In einem Autoklaven mit Glasdoppelmantel und Hastelloy C22 Deckel + Armaturen (Buechi AG) werden bei Raumtemperatur 36,2 g getrocknetes NaSH und 800 ml trockenes Ethanol vorgelegt und für 15 min bei 70-73°C gerührt. Es wird eine Mischung aus 100 g 3-Chlorpropyl(triethoxysilan) und 20 g einer Silanmischung aus 3-Chlorpropyl(diethoxy(chlor)silan), 3-Chlorpropyl(ethoxy(dichlor)silan), 3-Chlorpropyl(trichlorsilan) und 3-Chlorpropyl(triethoxysilan) mit einer Druckbürette zu der Suspension gegeben. Die 20 g werden einer Silan-Mischung entnommen, die durch Reaktion aus 694,2 g 3-Chlorpropyl(triethoxysilan) und 350,8 g 3-Chlorpropyl(trichlorsilan) erhalten wird. Über die Bürette werden weitere 200 ml Ethanol zu der Suspension gegeben, auf 101-104°C erwärmt und die Temperatur für 180 min gehalten. Die Mischung wird anschließend auf 56°C abgekühlt und 2,6 g Ameisensäure in 100 ml Ethanol mit einer Druckbürette zudosiert. Für 15 min wird gerührt und dann eine Probe entnommen. Die GC-Analyse der Reaktionsmischung ergibt folgende Zusammensetzung in Flächenprozent:

| | |
|---|---|
| 3-Chlorpropyl(triethoxysilan) | 0,042 |
| 3-Mercaptopropyl(triethoxysilan) | 5,572 |
| (EtO)₃Si-(CH₂)₃-S-(CH₂)₃-Si(OEt)₃ | 0,046 |
| (EtO)₃Si-(CH₂)₃-S₂-(CH₂)₃-Si(OEt)₃ | 0,022 |

Basierend auf den oben genannten Werten beträgt der Umsatz >99% und die Selektivität der Reaktion >98%.

Die erhaltene Suspension wird filtriert. Der abgetrennte Feststoff wird mit 400 ml n-Pentan gewaschen. Die erhaltene Lösung wird am Rotationsverdampfer von den flüchtigen Bestandteilen bei 20-600 mbar und 60-80°C befreit. Die erhaltene Suspension wird mit 200 ml Pentan gut vermischt und für 10 h bei 4-8°C gelagert. Der ausgefallene Feststoff wird durch Filtration abgetrennt und mit 150 ml Pentan gewaschen. Von der erhaltenen, klaren Lösung wird das Pentan mit einem Rotationsverdampfer bei 20-600 mbar und 60-80°C entfernt. Es werden 111,1 g einer farblosen Flüssigkeit erhalten.

Die Analyse mit GC (Dodekan als interner Standard) ergibt folgende Zusammensetzung des erhaltenen Produktes in Gewichtsprozent:

| | |
|---|---|
| 3-Chlorpropyl(triethoxysilan) (GC) | 0,7 |
| 3-Mercaptopropyl(triethoxysilan) (GC) | 94,9 |
| (EtO)₃Si-(CH₂)₃-S-(CH₂)₃-Si(OEt)₃ (GC) | 1,7 |

Basierend auf den oben genannten Werten beträgt der Umsatz >99% und die Selektivität der Reaktion 98%.

## Patentansprüche

1. Verfahren zur Herstellung von (Mercaptoorganyl)-alkoxysilanen,
**dadurch gekennzeichnet,**
**dass** man Alkalimetallhydrogensulfid mit einem Gemisch aus (Halogenorganyl)alkoxysilan und (Halogenorganyl)halogensilan in einem Alkohol in einem geschlossenen Gefäß unter Luftabschluß und einem erhöhten Druck umsetzt.

2. Verfahren zur Herstellung von (Mercaptoorganyl)-alkoxysilanen nach Anspruch 1,
**dadurch gekennzeichnet,**
**dass** man als (Mercaptoorganyl)alkoxysilan Verbindungen der allgemeinen Formel I 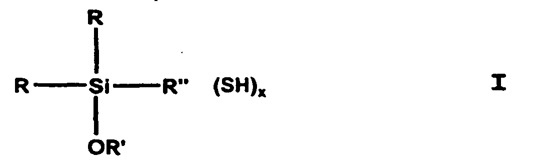 erhält, wobei R gleich oder verschieden und eine Alkyl-, Alkenyl-, Aryl- oder Aralkylgruppe mit C1-C8 oder eine OR' Gruppe ist,
R' gleich oder verschieden und eine C1-C24 verzweigte oder unverzweigte einbindige Alkyl- oder Alkenyl-Gruppe, Arylgruppe oder Aralkylgruppe ist, R" eine verzweigte oder unverzweigte, gesättigte oder ungesättigte, aliphatische, aromatische oder gemischt aliphatische /aromatische zweibindige C1-C30 Kohlenwasserstoffgruppe, die gegebenenfalls mit F-, Cl-, Br-, I-, NH₂- oder NHR' substituiert ist, ist,
x gleich 1-3 ist.

3. Verfahren zur Herstellung von (Mercaptoorganyl)-alkoxysilanen nach Anspruch 1,
**dadurch gekennzeichnet,**
**dass** man als (Halogenorganyl)alkoxysilan Verbindungen der allgemeinen Formel II 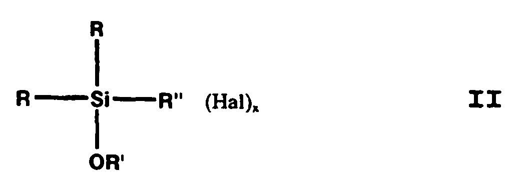 einsetzt, wobei R gleich oder verschieden und eine Alkyl-, Alkenyl-, Aryl- oder Aralkylgruppe mit C₁-C₈ oder eine OR' Gruppe ist,
R' gleich oder verschieden und eine C₁-C₂₄ verzweigte oder unverzweigte einbindige Alkyl- oder Alkenyl-Gruppe, Arylgruppe oder Aralkylgruppe ist,
R" eine verzweigte oder unverzweigte, gesättigte oder ungesättigte, aliphatische, aromatische oder gemischt aliphatische /aromatische zweibindige C₁-C₃₀ Kohlenwasserstoffgruppe ist, die gegebenenfalls mit F-, Cl-, Br-, I-, NH₂-, oder NHR' substituiert ist,
x gleich 1-3 ist,
Hal Chlor, Brom, Fluor oder Iod ist.

4. Verfahren zur Herstellung von (Mercaptoorganyl)alkoxysilanen nach Anspruch 1,
**dadurch gekennzeichnet,**
**dass** man als (Halogenorganyl)halogensilan Verbindungen der allgemeinen Formel III 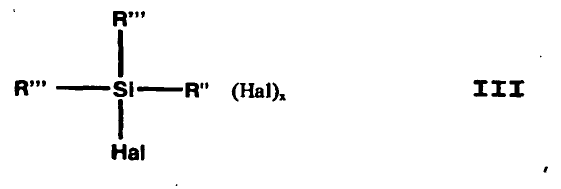 einsetzt, wobei x, Hal, R und R" die Bedeutung gemäß Formel II haben und R''' gleich oder verschieden und R oder Hal ist.

5. Verfahren zur Herstellung von (Mercaptoorganyl)-alkoxysilanen nach Anspruch 1,
**dadurch gekennzeichnet,**
**dass** man als Alkalimetallhydrogensulfid Lithiumhydrogensulfid (LiSH), Natriumhydrogensulfid (NaSH), Cäsiumhydrogensulfid (CsSH) oder Kaliumhydrogensulfid (KSH) einsetzt.

6. Verfahren zur Herstellung von (Mercaptoorganyl)-alkoxysilanen nach Anspruch 1,
**dadurch gekennzeichnet,**
**dass** man zu Beginn der Umsetzung und/oder während der Umsetzung und/oder zum Ende der Umsetzung polare, protische, aprotische, basische oder saure Additive zur Reaktionsmischung zugibt.

7. Verfahren zur Herstellung von (Mercaptoorganyl)-alkoxysilanen nach Anspruch 1,
**dadurch gekennzeichnet,**
**dass** das molare Verhältnis Halogenorganyl)alkyoxy-silan und (Halogenorganyl)halogensilan 1:0,00001 bis 1:0,8 beträgt.

8. Verfahren zur Herstellung von (Mercaptoorganyl)-alkoxysilanen nach Anspruch 1,
**dadurch gekennzeichnet,**
**dass** die Menge an hydrolisierbarem Si-Halogenid in der verwendeten Mischung aus Halogenorganyl)alkyoxy-silan und (Halogenorganyl)halogensilan zwischen 10 und 800000 mg/kg beträgt.

9. Verfahren zur Herstellung von (Mercaptoorganyl)-alkoxysilanen nach Anspruch 1,
**dadurch gekennzeichnet,**
**dass** die verwendete, molare Menge an Alkalimetallhydrogensulfid die Summe der molaren Mengen des eingesetzten (Halogenorganyl)alkoxysilans und des eingesetzten (Halogenorganyl)halogensilans um 1% bis 50% übersteigt.

10. Verfahren zur Herstellung von (Mercaptoorganyl)-alkoxysilanen nach Anspruch 1,
**dadurch gekennzeichnet,**
**dass** man als Alkohol primäre, sekundäre oder tertiäre Alkohole mit 1 bis 24 Kohlenstoffatomen einsetzt.

## Claims

1. A process for preparing (mercaptoorganyl)alkoxysilanes,
**characterised in that**
alkali-metal hydrogensulfide is converted with a mixture of (haloorganyl)alkoxysilane and (haloorganyl)-halosilane in an alcohol in a closed vessel with air excluded and at an elevated pressure.

2. Process for preparing (mercaptoorganyl)alkoxysilanes according to Claim 1,
**characterised in that**
compounds of the general formula I 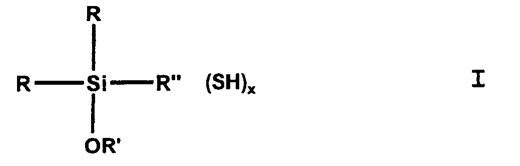 are obtained by way of (mercaptoorganyl)alkoxysilane, where R are the same or different and are each an alkyl, alkenyl, aryl or aralkyl group with C1-C8 or an OR' group,
R' is the same or different and is a C1-C24 branched or unbranched monovalent alkyl or alkenyl group, aryl group or aralkyl group,
R" is a branched or unbranched, saturated or unsaturated, aliphatic, aromatic or mixed aliphatic/ aromatic divalent C1-C30 hydrocarbon group, which is optionally substituted with F-, Cl-, Br-, I-, NH₂- or NHR',
x is equal to 1-3.

3. Process for preparing (mercaptoorganyl)alkoxysilanes according to Claim 1,
**characterised in that**
compounds of the general formula II 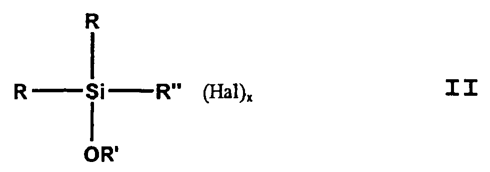 are employed by way of (haloorganyl)alkoxysilane, where R are the same or different and are each an alkyl, alkenyl, aryl or aralkyl group with C₁-C₈ or an OR' group,
R' is the same or different and is a C₁-C₂₄ branched or unbranched monovalent alkyl or alkenyl group, aryl group or aralkyl group,
R" is a branched or unbranched, saturated or unsaturated, aliphatic, aromatic or mixed aliphatic/ aromatic divalent C₁-C₃₀ hydrocarbon group, which is optionally substituted with F-, Cl-, Br-, I-, NH₂-, or NHR',
x is equal to 1-3,
Hal is chlorine, bromine, fluorine or iodine.

4. Process for preparing (mercaptoorganyl)alkoxysilanes according to Claim 1, **characterised in that** compounds of the general formula III 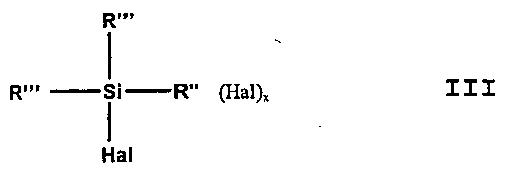 are employed by way of (haloorganyl)halosilane, where x, Hal, R and R" have the significance according to formula II, and R''' are the same or different and are each R or Hal.

5. Process for preparing (mercaptoorganyl)alkoxysilanes according to Claim 1,
**characterised in that**
lithium hydrogensulfide (LiSH), sodium hydrogensulfide (NaSH), caesium hydrogensulfide (CsSH) or potassium hydrogensulfide (KSH) is employed by way of alkali-metal hydrogensulfide.

6. Process for preparing (mercaptoorganyl)alkoxysilanes according to Claim 1,
**characterised in that**
at the start of the conversion and/or during the conversion and/or at the end of the conversion polar, protic, aprotic, basic or acidic additives are added to the reaction mixture.

7. Process for preparing (mercaptoorganyl)alkoxysilanes according to Claim 1,
**characterised in that**
the molar ratio of (haloorganyl)alkyoxysilane to (haloorganyl)halosilane amounts to 1:0.00001 to 1:0.8.

8. Process for preparing (mercaptoorganyl)alkoxysilanes according to Claim 1,
**characterised in that**
the quantity of hydrolysable Si halide in the mixture of (haloorganyl)alkyoxysilane and (haloorganyl)-halosilane that is used amounts to between 10 mg/kg and 800000 mg/kg.

9. Process for preparing (mercaptoorganyl)alkoxysilanes according to Claim 1,
**characterised in that**
the molar quantity of alkali-metal hydrogensulfide that is used exceeds the sum of the molar quantities of the (haloorganyl)alkoxysilane that is employed and of the (haloorganyl)halosilane that is employed by 1 % to 50 %.

10. Process for preparing (mercaptoorganyl)alkoxysilanes according to Claim 1,
**characterised in that**
primary, secondary or tertiary alcohols with 1 to 24 carbon atoms are employed by way of alcohol.

## Revendications

1. Procédé pour la préparation de (mercapto-organyl)alcoxysilanes,
**caractérisé en ce qu'**
on met en réaction de l'hydrogènosulfure de métaux alcalins avec un mélange composé d'(halogènorganyl)alcoxysilane et d'(halogènorganyl)-halogènesilane dans un alcool dans un récipient hermétiquement fermé et sous pression accrue.

2. Procédé pour la préparation de (mercapto-organyl)alcoxysilanes selon la revendication 1,
**caractérisé en ce que**
comme (mercapto-organyl)alcoxysilanes on obtient des composés répondant à la formule générale I 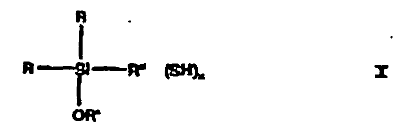 dans laquelle
R est identique ou différent et représente un groupe alkyle, alcényle, aryle ou aralkyle en C₁-C₈ ou un groupe OR',
R' est identique ou différent et représente un groupe alkyle ou alcényle, un groupe aryle ou un groupe aralkyle à une seule liaison, ramifié ou non ramifié, en C₁-C₂₄,
R" représente un groupe hydrocarbure ramifié ou non ramifié, saturé ou insaturé, aliphatique, aromatique ou mélangé aliphatique/aromatique à deux liaisons, en C₁-C₃₀, qui est remplacé le cas échéant par F, Cl, Br, I, NH₂ ou NHR',
x est égal à 1-3.

3. Procédé pour la préparation de (mercapto-organyl)alcoxysilanes selon la revendication 1,
**caractérisé en ce que**
comme (halogènorganyl)alcoxysilane on utilise des composés répondant à la formule générale II 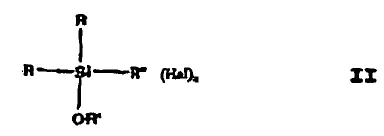 dans laquelle
R est identique ou différent et représente un groupe alkyle, alcényle, aryle ou aralkyle en C₁-C₈ ou un groupe OR'.
R' est identique ou différent et représente un groupe alkyle ou alcényle, un groupe aryle ou un groupe aralkyle à une seule liaison, ramifié ou non ramifié, en C₁-C₂₄,
R" représente un groupe hydrocarbure ramifié ou non ramifié, saturé ou insaturé, aliphatique, aromatique ou mélangé aliphatique/aromatique, à deux liaisons, en C₁-C₃₀, qui est remplacé le cas échéant par F-, Cl-, Br-, I-, NH₂- ou NHR',
x est égal à 1-3,
Hal représente du chlore, du brome, du fluor ou de l'iode.

4. Procédé pour la préparation de (mercapto-organyl)alcoxysilanes selon la revendication 1,
**caractérisé en ce que**
comme (halogènorganyl)halogènesilane on utilise des composés répondant à la formule générale III 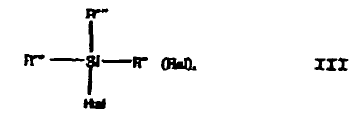 dans laquelle x, Hal, R et R'' ont la même signification que dans la formule II et R''' est identique ou différent et représente R ou Hal.

5. Procédé pour la préparation des (mercapto-organyl)alcoxysilanes selon la revendication 1,
**caractérisé en ce que**
comme hydrogènosulfure de métaux alcalins on utilise de l'hydrogènosulfure de lithium (LiSH), de sodium (NaSH), de césium (CsSH) ou de potassium (KSH).

6. Procédé pour la préparation de (mercapto-organyl)alcoxysilanes selon la revendication 1.
**caractérisé en ce qu'**
au début de la conversion et/ou pendant et/ou à la fin de celle-ci on ajoute des additifs polaires, protiques, aprotiques, basiques ou acides au mélange réactionnel.

7. Procédé pour la préparation de (mercapto-organyl)alcoxysilanes selon la revendication 1,
**caractérisé en ce que**
le rapport molaire (halogènorganyl)alcoxysilane et halogènorganyl)halogènesilane est de 1/0,00001 à 1/0,8.

8. Procédé pour la préparation de (mercapto-organyl)alcoxysilanes selon la revendication 1,
**caractérisé en ce que**
la quantité d'halogénure de Si hydrolysable dans le mélange utilisé d'(halogènorganyl)alkyoxysilane et d'(halogènorganyl)halogènesilane est comprise entre 10 et 800000 mg/kg.

9. Procédé pour la préparation de (mercapto-organyl)alcoxysilanes selon la revendication 1,
**caractérisé en ce que**
la quantité molaire utilisée d'hydrogènosulfure de métaux alcalins dépasse de 1 % à 50 % la somme des quantités molaires de l'(halogènorganyl)alcoxysilane utilisé et de l'(halogènorganyl)halogènesilane.

10. Procédé pour la préparation de (mercapto-organyl)alcoxysilanes selon la revendication 1,
**caractérisé en ce que**
comme alcool on utilise des alcools primaires, secondaires ou tertiaires comportant de 1 à 24 atomes de carbone.
